# EUROPEAN PATENT APPLICATION

(11) **EP 2 284 571 A1**
(43) Date of publication of application: **16.02.2011**
(21) Application number: 10007401.2
(22) Date of filing: 16.07.2010
(51) Int. Cl.: G01S 19/23

(54) **A method and system for calibrating a local GNSS clock using non-GNSS system clocks in a GNSS-enabled mobile device**

(30) Priority: 24.07.2009 US 509422
(71) Applicant: Broadcom Corporation, Irvine, CA 92617 (US)
(72) Inventor: Walley, John, Ladera Ranch, CA 92694 (US); Shoarinejad, Kambiz, Tustin, CA 92782 (US); Abraham, Charles, Los Gatos, CA 95033 (US)
(74) Representative: Jehle, Volker Armin

(57) **Abstract**

A GNSS enabled mobile device is operable to receive two or more system clocks via from a plurality of associated non-GNSS communication networks, for example, GSM, GPRS, UMTS, EDGE, EGPRS, LTE, WiMAX, high-speed wireless LAN (WiFi), and/or short-range wireless (Bluetooth). The received system clocks are used to calibrate an local GNSS clock for the GNSS enabled mobile device. The GNSS enabled mobile device communicates the received system clocks with an associated GNSS receiver without using an external circuitry. The GNSS receiver selects a calibration clock from the received system clocks based on the status (active or inactive) of corresponding system clocks. An active system clock is selected as the calibration clock. The associated local GNSS clock is calibrated by removing clock errors from the associated local GNSS clock using the selected calibration clock. The calibrated local GNSS clock is used for detecting GNSS signals and/or processing detected GNSS signals.

## Description

### CROSS-REFERENCE TO RELATED APPLICATIONS/INCORPORATION BY REFERENCE

NOT APPLICABLE.

### FIELD OF THE INVENTION

Certain embodiments of the invention relate to communication systems. More specifically, certain embodiments of the invention relate to a method and system for calibrating a local GNSS clock using non-GNSS system clocks in a GNSS enabled mobile device.

### BACKGROUND OF THE INVENTION

Location based services (LBS) are emerging as a new type of value-added service provided by mobile communication network. LBS are mobile services in which the location information of mobile devices is used in order to enable various LBS applications such as, for example, enhanced 911 (E-911), location-based 411, location-based messaging and/or friend finding. A position of a mobile device is determined using, for example, satellite-based systems such as Global Navigation Satellite Systems (GNSS) such as, for example, the Global Positioning System (GPS), the Global Orbiting Navigation Satellite System (GLONASS), and the satellite navigation system GALILEO.

A GNSS utilizes an earth-orbiting constellation of a plurality of GNSS satellites each broadcasting GNSS signals which indicates its precise location and ranging information. From any location on or near the earth where the satellites may be visible, a GNSS enabled mobile device may detect GNSS signals using a local GNSS clock such as a crystal or temperature compensated crystal oscillator (TCXO). The local GNSS clock provides a clock (time) reference for position fixing. The GNSS enabled mobile device is operable to take various GNSS measurements such as pseudorange, carrier phase, and/or Doppler and utilize the resulting measurements to calculate corresponding navigation information such as a position fix, velocity, and time. The GNSS enabled mobile device utilizes the calculated navigation information for various LBS applications such as E911, location-based 411, location-based messaging and/or friend finding. The LBS applications may be realized using various technology communication networks such as, for example, GSM, GPRS, UMTS, EDGE, EGPRS, LTE, WiMAX, high-speed wireless LAN (WiFi), and/or short-range wireless (Bluetooth).

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A method and/or system for calibrating a local GNSS clock using non-GNSS system clocks in a GNSS enabled mobile device, substantially as shown in and/or described in connection with at least one of the figures, as set forth more completely in the claims.
According to an aspect, a method for communication comprises:
performing by one or more processors and/or circuits in a Global Navigation Satellite Systems (GNSS) enabled mobile device:
   receiving two or more system clocks from two or more non-GNSS communication networks; and
   calibrating a local GNSS clock of said GNSS enabled mobile device using said received two or more system clocks.

Advantageously, said plurality of associated non-GNSS communication networks comprise Global System for Mobile communications (GSM), General Packet Radio Services (GPRS), Universal Mobile Telecommunications System (UMTS), Enhanced Data rates for GSM Evolution (EDGE), Enhanced GPRS (EGPRS), Long Term Evolution (LTE), Worldwide Interoperability for Microwave Access (WiMAX), high-speed wireless LAN (WiFi), and/or short-range wireless.

Advantageously, the method further comprises calibrating said local GNSS clock using software inputs.

Advantageously, the method further comprises calibrating said local GNSS clock without using an external circuitry.

Advantageously, the method further comprises selecting a calibration clock from said received two or more system clocks.

Advantageously, said selected calibration clock is an active system clock.

Advantageously, the method further comprises removing clock errors from said local GNSS clock using said selected calibration clock.

Advantageously, the method further comprises calibrating said local GNSS clock using said selected calibration clock.

Advantageously, the method further comprises detecting GNSS signals using said calibrated local GNSS clock.

Advantageously, the method further comprises processing said detected GNSS signals using said calibrated local GNSS clock.

According to an aspect, a system for communication comprises:
one or more processors and/or circuits for use in a Global Navigation Satellite Systems (GNSS) enabled mobile device, wherein said one or more processors and/or circuits are operable to:
   receive two or more system clocks from two or more non-GNSS communication networks; and
   calibrate a local GNSS clock of said GNSS enabled mobile device using said received two or more system clocks.

Advantageously, said plurality of associated non-GNSS communication networks comprise Global System for Mobile communications (GSM), General Packet Radio Services (GPRS), Universal Mobile Telecommunications System (UMTS), Enhanced Data rates for GSM Evolution (EDGE), Enhanced GPRS (EGPRS), Long Term Evolution (LTE), Worldwide Interoperability for Microwave Access (WiMAX), high-speed wireless LAN (WiFi), and/or short-range wireless.

Advantageously, said one or more processors and/or circuits are operable to calibrate said local GNSS clock using software inputs.

Advantageously, said one or more processors and/or circuits are operable to calibrate said local GNSS clock without using an external circuitry.

Advantageously, said one or more processors and/or circuits are operable to select a calibration clock from said received two or more system clocks.

Advantageously, said selected calibration clock is an active system clock.

Advantageously, said one or more processors and/or circuits are operable to remove clock errors from said local GNSS clock using said selected calibration clock.

Advantageously, said one or more processors and/or circuits are operable to calibrate said local GNSS clock using said selected calibration clock.

Advantageously, said one or more processors and/or circuits are operable to detect GNSS signals using said calibrated local GNSS clock.

Advantageously, said one or more processors and/or circuits are operable to process said detected GNSS signals using said calibrated local GNSS clock.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a diagram illustrating an exemplary communication system that is operable to calibrate a local GNSS clock using system clocks in a GNSS enabled mobile device, in accordance with an embodiment of the invention.

FIG. 2 is a block diagram illustrating an exemplary GNSS enabled mobile device that is operable to calibrate a local GNSS clock using system clocks, in accordance with an embodiment of the invention.

FIG. 3 is a block diagram illustrating an exemplary GNSS receiver that is operable to calibrate a local GNSS clock using system clocks, in accordance with an embodiment of the invention.

FIG. 4 is a block diagram illustrating an exemplary GNSS clock calibrator that utilizes system clocks to calibrate a local GNSS clock, in accordance with an embodiment of the invention.

FIG. 5 a flow chart illustrating an exemplary GNSS clock calibration procedure that is utilized in a GNSS enabled mobile device, in accordance with an embodiment of the invention.

### DETAILED DESCRIPTION OF THE INVENTION

Certain embodiments of the invention may be found in a method and system for calibrating a local GNSS clock using non-GNSS system clocks in a GNSS enabled mobile device. In various embodiments of the invention, a GNSS enabled mobile device may be operable to receive two or more system clocks from a plurality of associated non-GNSS communication networks. The received two or more system clocks may be used to calibrate an associated local GNSS clock. The plurality of associated non-GNSS communication networks may comprise, for example, GSM, GPRS, UMTS, EDGE, EGPRS, LTE, WiMAX, high-speed wireless LAN (WiFi), and/or short-range wireless (Bluetooth). The GNSS enabled mobile device may be operable to communicate the received two or more system clocks with an associated GNSS receiver via software without using external circuitry. The associated GNSS receiver may be operable to select a calibration clock from the received two or more system clocks. The calibration clock may be selected based on, for example, the status (active or inactive) of corresponding system clocks. The selected calibration clock may be an active system clock. The associated GNSS receiver may be operable to remove clock errors from the associated local GNSS clock using the selected calibration clock in order to dynamically calibrate the associated local GNSS clock. The calibrated local GNSS clock may be used for various GNSS activities such as, for example, detecting GNSS signals and/or processing detected GNSS signals.

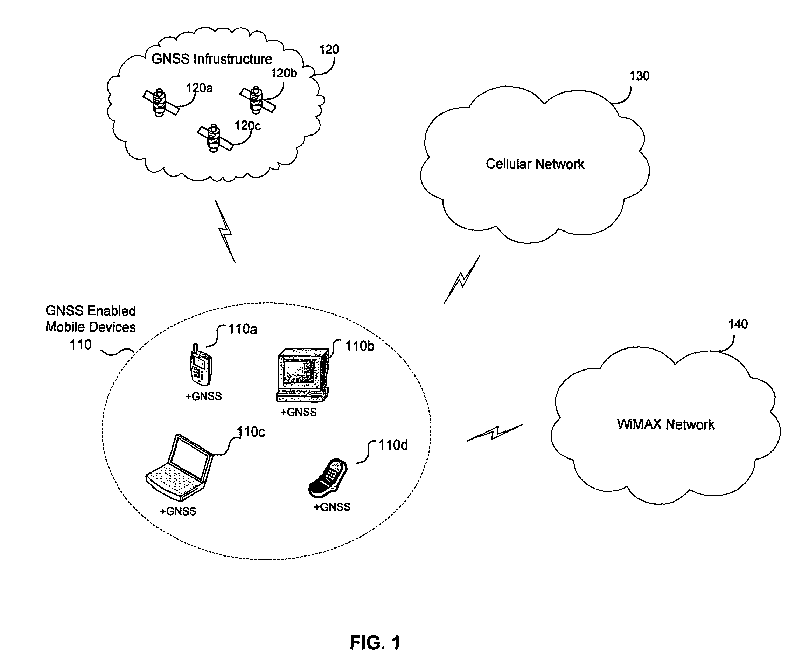

FIG. 1 is a diagram illustrating an exemplary communication system that is operable to calibrate a local GNSS clock using system clocks in a GNSS enabled mobile device, in accordance with an embodiment of the invention. Referring to FIG. 1, there is shown a communication system 100. The communication system comprises a plurality of GNSS enabled mobile devices 110, of which GNSS enabled mobile devices 110a-110d are illustrated, a GNSS infrastructure 120, a cellular network 130 and a WiMAX network 140. The GNSS infrastructure 120 comprises a plurality of GNSS satellites such as GNSS satellites 120a through 120c.

A GNSS enabled mobile device such as the GNSS enabled mobile device 110a may comprise suitable logic, circuitry, interfaces and/or code that are operable to communicate radio signals across the cellular network 130 and/or the WiMAX network 140. The GNSS enabled mobile device 110a may be operable to receive GNSS broadcast signals from a plurality of visible GNSS satellites such as GNSS satellites 120a through 120c in the GNSS infrastructure 120. The GNSS signals may be detected and received at the GNSS enabled mobile device 110a using a local GNSS clock. The local GNSS clock may be implemented using, for example, a crystal or temperature compensated crystal oscillator (TCXO) for low phase noise. The received GNSS signals may be utilized to determine navigation information such as a position fix and/or a velocity of the GNSS enabled mobile device 110a. The determined navigation information such as a position fix of the GNSS enabled mobile device 110a may be communicated with, for example, the cellular network 130 and/or the WiMAX network 140, for various LBS applications such as E911, location-based 411, location-based messaging and/or friend finding. The GNSS enabled mobile device 110a may be operable to receive corresponding system clocks from the cellular network 130 and the WiMAX network 140, respectively. The received system clocks may be utilized to keep associated local clocks such as a host clock up-to-date. In this regard, the received system clocks may be used as clock calibration signals to calibrate the local GNSS clock for an accurate GNSS clock reference. The GNSS enabled mobile device 110a may be operable to utilize the calibrated GNSS clock to acquire and track GNSS signals, accordingly.

A GNSS satellite such as the GNSS satellite 120a may comprise suitable logic, circuitry, interfaces and/or code that is operable to provide satellite navigational information to various GNSS receivers on earth. The GNSS receivers, which comprise GPS, GALILEO and/or GLONASS receivers, are integrated within or externally coupled to GNSS capable mobile devices such as the GNSS enabled mobile devices 110a through 110c. The GNSS satellite 120a may be operable to broadcast its own ephemeris periodically, for example, once every 30 seconds. The broadcast ephemeris may be utilized to calculate navigation information such as, for example, a position fix, velocity, and clock information of the GNSS receivers. The GNSS satellite 120a may be operable to update ephemeris, for example, every two hours. The broadcast ephemeris may be valid for a limited time period such as, for example, 2 to 4 hours into the future (from the time of broadcast).

The cellular network 130 may comprise suitable logic, circuitry, interfaces and/or code that may be operable to provide data services to various mobile devices such as the GNSS enabled mobile devices 110a-110c by using cellular communication technologies such as, for example, GSM, GPRS, UMTS, EDGE, EGPRS and/or LTE. The cellular network 130 may be operable to generate system clock signals (timing signals) and distribute to the GNSS enabled mobile devices 110a-110c.

The WiMAX network 140 may comprise suitable logic, circuitry, interfaces and/or code that may be operable to provide data services to various mobile devices such as the GNSS enabled mobile devices 110a-110c by using WiMAX communication technology. The WiMAX network 140 may be operable to generate system clock signals (timing signals) and distribute to the GNSS enabled mobile devices 110a-110c.

Although the cellular network 130 and the WiMAX network 140 are illustrated in FIG. 1, the invention may not be so limited. Accordingly, other communication networks such as, for example, high-speed wireless LAN (WiFi) and/or short-range wireless (Bluetooth) may be utilized for transmitting system clock signals to the GNSS enabled mobile device 110a without departing from the spirit and scope of various embodiments of the invention.

In an exemplary operation, a GNSS enabled mobile device such as the GNSS enabled mobile device 110a may be operable to detect and receive GNSS signals from, for example, the GNSS satellites 120a-120d, using an associated local GNSS clock. The GNSS enabled mobile device 110a may be operable to utilize the received GNSS signals to calculate, for example, a position fix of the GNSS enabled mobile device 110a. The calculated position fix may be communicated with the cellular network 130 and/or the WiMAX network 140 for various LBS applications such as E911, location-based 411, location-based messaging and/or friend finding. The cellular network 130 and/or the WiMAX network 140 may be operable to generate system clocks and distribute the generated system clocks to mobile devices such as the GNSS enabled mobile device 110a to keep corresponding local clocks current. In this regard, the GNSS enabled mobile device 110a may be operable to utilize the received system clocks to calibrate the associated local GNSS clock without a need for external circuitry that would otherwise be needed.

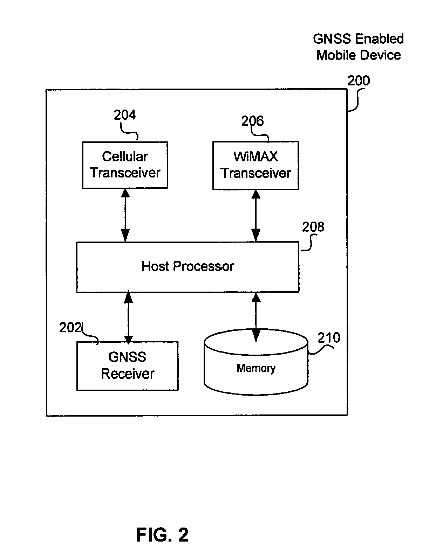

FIG. 2 is a block diagram illustrating an exemplary GNSS enabled mobile device that is operable to calibrate a local GNSS clock using system clocks, in accordance with an embodiment of the invention. Referring to FIG. 2, there is shown a GNSS enabled mobile device 200. The GNSS enabled mobile device 200 may comprise a GNSS receiver 202, a cellular transceiver 204, a WiMAX transceiver 206, a host processor 208, and a memory 210.

The GNSS receiver 202 may comprise suitable logic, circuitry, interfaces and/or code that may be operable to detect and receive GNSS signals from a plurality of visible GNSS satellites using an associated local GNSS clock such as a TCXO. The GNSS receiver 202 may be operable to utilize the received GNSS signals to calculate navigation information such as a position fix and/or velocity of the GNSS receiver 202. The calculated navigation information may be provided to the host processor 210 to be communicated with the cellular network 130 and/or the WiMAX network 140 for various location-based applications such as, for example, location-based 411. The GNSS receiver 202 may be operable to communicate with the host processor 210 for system clocks distributed by the cellular network 130 and the WiMAX network 140, respectively. The GNSS receiver 202 may be operable to utilize the system clocks as GNSS clock calibration signals to calibrate the associated local GNSS clock. The calibrated local GNSS clock may then be used for accurately acquiring and tracking GNSS signals, for example.

The cellular transceiver 204 may comprise suitable logic, circuitry, interfaces and/or code that may be operable to communicate radio signals over the cellular network 130. The cellular transceiver 204 may be operable to receive timing signals from the cellular network 130. The received timing signals may comprise a system clock of the cellular network 130. The cellular transceiver 204 may be operable to utilize the received system clock as a reference frequency source for communicating radio signals with the cellular network 130, accordingly.

The WiMAX transceiver 206 may comprise suitable logic, circuitry, interfaces and/or code that may be operable to communicate radio signals over the WiMAX network 140. The WiMAX transceiver 206 may be operable to receive timing signals from the WiMAX network 140. The received timing signals may comprise a system clock of the WiMAX network 140. The WiMAX transceiver 206 may be operable to utilize the received system clock as a reference frequency source for communicating radio signals with the WiMAX network 140, accordingly.

The host processor 208 may comprise suitable logic, circuitry, interfaces and/or code that may be operable to process signals from the GNSS receiver 202, the cellular transceiver 204, and/or the WiMAX transceiver 206 depending on corresponding usages. The host processor 208 may be operable to communicate signals with the cellular network 130 and/or the WiMAX network 140 via the cellular transceiver 204 and the WiMAX transceiver 206, respectively. The signals may comprise system clocks received from the cellular network 130 and/or the WiMAX network 140. The host processor 208 may be operable to enable the GNSS receiver 202 to calibrate associated local GNSS clock using the received system clocks of the cellular network 130 and/or the WiMAX network 140. The host processor 208 may be operable to communicate navigation information, which may be calculated using the calibrated local GNSS clock at the GNSS receiver 202, with the cellular network 130 and/or the WiMAX network 140 for various LBS applications such as location-based 411 and/or roadside assistance.

The memory 210 may comprise suitable logic, circuitry, and/or code that operable to store information such as executable instructions and data that may be utilized by the host processor 208. The memory 210 may comprise RAM, ROM, low latency nonvolatile memory such as flash memory and/or other suitable electronic data storage.

In an exemplary operation, the GNSS receiver 202 may be operable to receive GNSS signals from each of the visible GNSS satellites using an associated local GNSS clock such as a TCXO. The GNSS receiver 202 may be operable to calculate a position fix and/or velocity of the GNSS receiver 202. The calculated position fix of the GNSS receiver 202 may be communicated with the host processor 208. The host processor 208 may be operable to communicate the calculated position fix of the GNSS receiver 202 with the cellular network 130 and/or the WiMAX network 140 via the cellular transceiver 204 and/or the WiMAX transceiver 206, respectively, for various LBS applications such as roadside assistance. The host processor 208 may be operable to receive timing signals from the cellular network 130 and/or the WiMAX network 140. The received timing signals may comprise corresponding system clocks of the cellular network 130 and/or the WiMAX network 140 and may be used as reference frequency sources for communicating corresponding applications. The host processor 208 may be operable to communicate the received system clocks with the GNSS receiver 202. The GNSS receiver 202 may be operable to utilize the received system clocks as GNSS clock calibration signals to calibrate the associated local GNSS clock without a need for external circuitry.

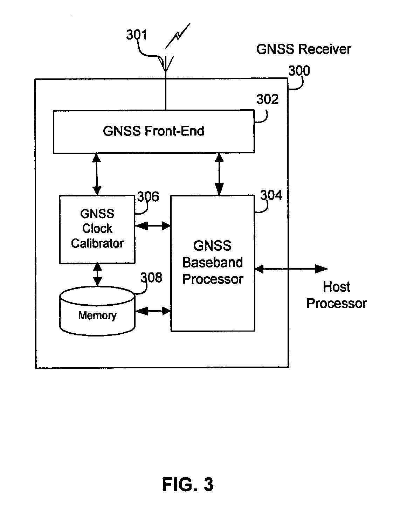

FIG. 3 is a block diagram illustrating an exemplary GNSS receiver that is operable to calibrate a local GNSS clock using system clocks, in accordance with an embodiment of the invention. Referring to FIG. 3, there is shown a GNSS receiver 300. The GNSS receiver 300 may comprise a GNSS antenna 301, a GNSS front-end 302, a GNSS processor 304, a GNSS clock calibrator 306, and a memory 308.

The GNSS antenna 301 may comprise suitable logic, circuitry, interfaces and/or code that may be operable to receive GNSS signals from a plurality of visible GNSS satellites such as the GNSS satellites 120a through 120d. The GNSS antenna 301 may be operable to communicate the received GNSS signals to the GNSS front-end 302 for further processing.

The GNSS front-end 302 may comprise suitable logic, circuitry, interfaces and/or code that may be operable to convert the received GNSS signals to GNSS baseband signals, which may be suitable for further processing in the GNSS processor 304. The GNSS front-end 302 may be operable to detect and track GNSS signals using an associated local GNSS clock. The associated local GNSS clock may be dynamically calibrated via the GNSS clock calibrator 306.

The GNSS baseband processor 304 may comprise suitable logic, circuitry, interfaces and/or code that may be operable to process GNSS baseband signals from the GNSS front-end 302 to extract the information and data bits conveyed in the received GNSS signals. The GNSS baseband processor 304 may be operable to perform functions such as clock recovery, channel selection, demodulation, and/or decoding. The GNSS baseband processor 304 may be operable to calculate navigation information such as a position fix using the GNSS baseband signals from the GNSS front-end 302. The GNSS baseband processor 304 may be operable to communicate the calculated navigation information with the host processor 208 for various LBS applications such as E911 supported by the cellular network 130 and/or the WiMAX network 140. The GNSS baseband processor 304 may be operable to receive network timing information such as system clocks of the cellular network 130 and/or the WiMAX network 140 from the host processor 208. The GNSS baseband processor 304 may communicate the receiver system clocks with the GNSS clock calibrator 306 to refine the associated GNSS clock.

The GNSS clock calibrator 306 may comprise suitable logic, circuitry, interfaces and/or code that may be operable to calibrate the associated local GNSS clock of the GNSS receiver 300. The GNSS clock calibrator 306 may be operable to provide calibrated local GNSS clock to the GNSS front-end 302 and/or the GNSS baseband processor 304. The GNSS clock calibrator 306 may be operable to remove clock errors in the associated local GNSS clock using the system clocks received from the GNSS baseband processor 304. The GNSS clock calibrator 306 may be operable to calibrate the associated local GNSS clock without a need for external circuitry.

The memory 308 may comprise suitable logic, circuitry, interfaces and/or code that may enable storage of information such as executable instructions and data that may be utilized by the GNSS baseband processor 304. The executable instructions may be utilized to calculate a position fix of the GNSS receiver 300 using GNSS measurements. The executable instructions may be utilized to indicate active system clocks received from external communication networks such as, for example, the cellular network 130 and/or the WiMAX network 140. The data may comprise the determined position fix of the GNSS receiver 300 and/or GNSS click calibration data. The memory 308 may comprise RAM, ROM, low latency nonvolatile memory such as flash memory and/or other suitable electronic data storage.

In operation, the GNSS receiver 300 may be operable to process, using an associated local GNSS clock, GNSS signals received via the antenna 301 for GNSS measurements. The GNSS front-end 302 may be operable to process the received GNSS signals and convert into GNSS baseband signals. The converted GNSS baseband signals may communicate with the GNSS baseband processor 304 for GNSS baseband processing. The processed GNSS baseband signals may be used to calculate a position fix of the GNSS receiver 300. The calculated position fix may be forward to the host processor 210 for a location-based application. The GNSS baseband processor 304 may be operable to receive network timing information such as system clocks of the cellular network 130 and/or the WiMAX network 140. The received system clocks may be utilized as GNSS clock calibration signals to the GNSS clock calibrator 306. The GNSS clock calibrator 306 may be operable to calibrate the associated local GNSS clock using the received system clocks. The GNSS clock calibrator 306 may be operable to communicate the calibrated local GNSS clock with the GNSS front-end 302 and/or the GNSS baseband processor 304, respectively. The calibrated local GNSS clock may be utilized to process corresponding GNSS activities such as, for example, GNSS signal acquisition, GNSS signal tracking, and/or position calculation.

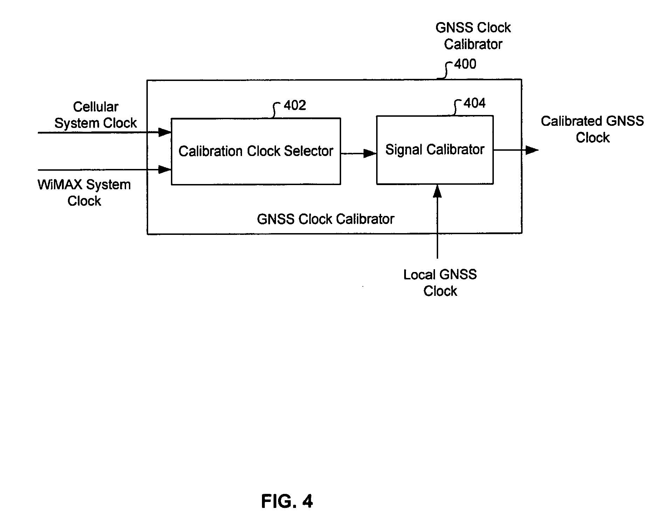

FIG. 4 is a block diagram illustrating an exemplary GNSS clock calibrator that utilizes system clocks to calibrate a local GNSS clock, in accordance with an embodiment of the invention. Referring to FIG. 4, there is shown a GNSS clock calibrator 400. The GNSS clock calibrator 400 may comprise a calibration clock selector 402 and a signal calibrator 404.

The calibration clock selector 402 may comprise suitable logic, circuitry, interfaces and/or code that may be operable to select a calibration clock from separate calibration clock inputs. The separate calibration clock inputs comprise a system clock from the cellular network 130 and a system clock from the WiMAX network 140. The system clocks may be received from the host processor 208 of the GNSS enabled mobile device 200. The calibration clock selector 402 may be operable to determine which one of the received system clocks to be used as the calibration clock. For example, the calibration clock selector 402 may be operable to select the calibration clock from the received system clocks according to, for example, a status of corresponding system clock. The status may provide an indication of whether the clock is active or inactive. The selected calibration clock may be communicated with the signal calibrator 404 to calibrate the associated local GNSS clock.

The signal calibrator 404 may comprise suitable logic, circuitry, and/or code that may be configured to remove clock error from the associated local GNSS clock by, for example, correlating the associated local GNSS clock with the selected calibration clock from the calibration signal generator 402. The signal calibrator 404 may communicate the calibrated local GNSS clock with the GNSS baseband processor 304 and the GNSS front-end 302 to produce accurate navigation information and/or accurately track GNSS signals.

In an exemplary operation, the GNSS clock calibrator 400 may be operable to receive system clocks of the cellular network 130 and the WiMAX network 140 via the host processor 208. The calibration clock selector 402 may be operable to select a calibration clock from the received system clocks. The selected calibration clock may be communicated with the signal calibrator 404. The signal calibrator 404 may be operable to utilize the selected calibration clock to offset clock errors in the associated local GNSS clock of the GNSS receiver 300. The calibrated local GNSS clock may be communicated with the GNSS front-end 302 and the GNSS baseband processor 304 for corresponding GNSS activities.

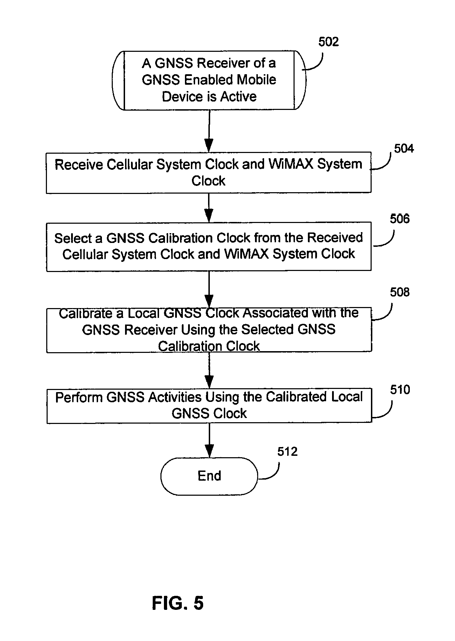

FIG. 5 a flow chart illustrating an exemplary GNSS clock calibration procedure that is utilized in a GNSS enabled mobile device, in accordance with an embodiment of the invention. Referring to FIG. 5, the exemplary steps may start with the step 502. In step 502, the GNSS receiver 202 of the GNSS enabled mobile device 200 is active. In step 504, the GNSS baseband processor 304 may be operable to receive system clocks for the cellular network 130 and the WiMAX network 140 from the host processor 208. The host processor 208 may be operable to acquire the system clocks of the cellular network 130 and the WiMAX network 140 via the cellular transceiver 204 and the WiMAX transceiver 206, respectively. In step 506, the calibration clock selector 402 may be operable to select a GNSS calibration clock from the received system clocks of the cellular network 130 and the WiMAX network 140. The GNSS calibration clock may be selected according to, for example, the status of corresponding system clock (active or inactive). In step 508, the signal calibrator 404 may be operable to calibrate the associated local GNSS clock of the GNSS receiver 202 using the selected GNSS calibration clock. The calibrated local GNSS clock may be communicated with the GNSS front-end 302 and the GNSS baseband processor 304. In step 510, the GNSS front-end 302 and the GNSS baseband processor 304 may be operable to utilize the calibrated local GNSS clock to perform corresponding GNSS activities such as, for example, GNSS signal acquisition and position calculation. The exemplary steps end in step 512.

In various exemplary aspects of the method and system for calibrating a local GNSS clock using non-GNSS system clocks in a GNSS enabled mobile device, as described with respect to, for example, FIG. 1 through FIG. 5, a GNSS enabled mobile device such as the GNSS enabled mobile device 200 may be operable to receive two or more system clocks via, for example, the cellular transceiver 204 and/or the WiMAX transceiver 206 from a plurality of associated non-GNSS communication networks. The received two or more system clocks may be communicated to the GNSS receiver 202 where it may be utilized to calibrate an associated local GNSS clock in GNSS receiver 202. The plurality of associated non-GNSS communication networks may comprise, for example, GSM, GPRS, UMTS, EDGE, EGPRS, LTE, WiMAX, high-speed wireless LAN (WiFi), and/or short-range wireless (Bluetooth).

The host processor 208 may be operable to communicate the received two or more system clocks with the GNSS receiver 202 via software such as signaling messages without using an external circuitry. The GNSS clock calibrator 306 may be operable to select a calibration clock from the received two or more system clocks via the calibration clock selector 402. The calibration clock may be selected based on, for example, a status (active or inactive) of corresponding system clocks. The selected calibration clock may be an active system clock. The signal calibrator 404 may be operable to remove clock errors from the associated local GNSS clock using the selected calibration clock in order to dynamically calibrate the associated local GNSS clock. The calibrated local GNSS clock may be communicated with the GNSS front-end 302 and the GNSS baseband processor 304. The GNSS front-end 302 may be operable to detect GNSS signals using the calibrated local GNSS clock. The detected GNSS signals may be processed using the calibrated local GNSS clock via the GNSS baseband processor 304, accordingly.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for a method and system for calibrating a local GNSS clock using non-GNSS system clocks in a GNSS enabled mobile device.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for communication, the method comprising:
performing by one or more processors and/or circuits in a Global Navigation Satellite Systems (GNSS) enabled mobile device:
receiving two or more system clocks from two or more non-GNSS communication networks; and
calibrating a local GNSS clock of said GNSS enabled mobile device using said received two or more system clocks.

2. The method according to claim 1, wherein said plurality of associated non-GNSS communication networks comprise Global System for Mobile communications (GSM), General Packet Radio Services (GPRS), Universal Mobile Telecommunications System (UMTS), Enhanced Data rates for GSM Evolution (EDGE), Enhanced GPRS (EGPRS), Long Term Evolution (LTE), Worldwide Interoperability for Microwave Access (WiMAX), high-speed wireless LAN (WiFi), and/or short-range wireless.

3. The method according to claim 1, comprising calibrating said local GNSS clock using software inputs.

4. The method according to claim 1, comprising calibrating said local GNSS clock without using an external circuitry.

5. The method according to claim 1, comprising selecting a calibration clock from said received two or more system clocks.

6. The method according to claim 5, wherein said selected calibration clock is an active system clock.

7. The method according to claim 5, comprising removing clock errors from said local GNSS clock using said selected calibration clock.

8. The method according to claim 5, comprising calibrating said local GNSS clock using said selected calibration clock.

9. The method according to claim 8, comprising detecting GNSS signals using said calibrated local GNSS clock.

10. The method according to claim 9, comprising processing said detected GNSS signals using said calibrated local GNSS clock.

11. A system for communication, the system comprising:
one or more processors and/or circuits for use in a Global Navigation Satellite Systems (GNSS) enabled mobile device, wherein said one or more processors and/or circuits are operable to:
receive two or more system clocks from two or more non-GNSS communication networks; and
calibrate a local GNSS clock of said GNSS enabled mobile device using said received two or more system clocks.

12. The system according to claim 11, wherein said plurality of associated non-GNSS communication networks comprise Global System for Mobile communications (GSM), General Packet Radio Services (GPRS), Universal Mobile Telecommunications System (UMTS), Enhanced Data rates for GSM Evolution (EDGE), Enhanced GPRS (EGPRS), Long Term Evolution (LTE), Worldwide Interoperability for Microwave Access (WiMAX), high-speed wireless LAN (WiFi), and/or short-range wireless.

13. The system according to claim 11, wherein said one or more processors and/or circuits are operable to calibrate said local GNSS clock using software inputs.

14. The system according to claim 11, wherein said one or more processors and/or circuits are operable to calibrate said local GNSS clock without using an external circuitry.

15. The system according to claim 11, wherein said one or more processors and/or circuits are operable to select a calibration clock from said received two or more system clocks.
